# EUROPEAN PATENT APPLICATION

(11) **EP 4 443 220 A1**
(43) Date of publication of application: **09.10.2024**
(21) Application number: 24168717.7
(22) Date of filing: 05.04.2024
(51) Int. Cl.: G02F 1/01

(54) **VARIABLE THERMAL EMISSIVITY COATING AND METHOD**

(30) Priority: 05.04.2023 US 202363494404 P
(71) Applicant: Teledyne Scientific & Imaging, LLC, Thousand Oaks, CA 91360 (US)
(72) Inventor: Mihailovich, Robert, Newbury Park, California (US); DeNatale, Jeffrey, Newbury Park, California (US)
(74) Representative: HGF

(57) **Abstract**

A coating comprising a first dielectric overlayer, a first dielectric underlayer, a continuous thermochromic layer disposed between the first dielectric overlayer and the first dielectric underlayer, and a metal layer disposed below the first dielectric underlayer.

## Description

### CROSS REFERENCE TO RELATED APPLICATIONS

The present application claims priority under 35 U.S.C. Section 119(e) from Provisional Application 63/494,404, entitled "Variable Thermal Emissivity Coating And Method," filed on April 5, 2023, the entire contents of each are incorporated herein by reference.

### FIELD

This disclosure relates generally to the field of variable emissivity coatings. More particularly, this disclosure relates generally to variable emissivity coatings comprised of thermochromic layers.

### BACKGROUND

Approaches for thermal control include active heat source/sink systems (heating: resistive, radioisotope/cooling: thermoelectric, fluid loop) have significant size, weight, and power (SWAP) impacts. Passive thermal control by radiation control can be utilized using actuated louvres or passive bimorph louvres, which provide some SWAP advantages, but are complicated.

Radiative thermal control using VO₂-based dynamic coatings have been demonstrated by various research groups. However, these demonstrations have not achieved the thermal emissivity (TE) targets for such applications such that Cold TE < 0.25 and Hot TE > 0.85. These TE targets have, however, been achieved by the coatings and methods proposed in the following disclosure.

### SUMMARY

In part, in one aspect, the disclosure relates to a coating comprising a first dielectric overlayer, a first dielectric underlayer, a continuous thermochromic layer disposed between the first dielectric overlayer and the first dielectric underlayer, and a metal layer disposed below the first dielectric underlayer.

In another aspect, the disclosure relates to a method of manufacturing a coating comprising depositing a metal layer over a substrate, depositing a first dielectric underlayer over the metal layer, depositing a thermochromic layer over the first dielectric underlayer, and depositing a first dielectric overlayer over the thermochromic layer.

Although, the disclosure relates to different aspects and embodiments, it is understood that the different aspects and embodiments disclosed herein can be integrated, combined, or used together as a combination system, or in part, as separate components, devices, and systems, as appropriate. Thus, each embodiment disclosed herein can be incorporated in each of the aspects to varying degrees as appropriate for a given implementation. Further, the various apparatus, optical elements, passivation coatings / layers, optical paths, waveguides, splitters, couplers, combiners, electro-optical devices, inputs, outputs, ports, channels, components and parts of the foregoing disclosed herein can be used comprising laser, laser-based communication system, waveguide, fiber, transmitter, transceiver, receiver, and other devices and systems without limitation. These and other features of the applicant's teachings are set forth herein.

### BRIEF DESCRIPTION OF THE FIGURES

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1 is a coating according to one aspect of the disclosure.
Figure 2 is a variable thermal emissivity coating according to one aspect of the disclosure.
Figure 3 is a variable thermal emissivity coating with a capping layer according to one aspect of the disclosure.
Figure 4 is a variable thermal emissivity coating with a capping layer according to one aspect of the disclosure.
Figure 5 is a variable thermal emissivity coating according to one aspect of the disclosure.
Figure 6 is a variable thermal emissivity coating according to one aspect of the disclosure.
Figure 7 shows graphs of thermal emissivity of a variable emissivity coating in hot and cold states, according to one aspect of the disclosure.
Figure 8 is a thermal control system for a space platform comprising variable emissivity coatings described in Figures 1-6, according to one aspect of the disclosure.
Figure 9 is one aspect of a method 900 of manufacturing a variable emissivity coating, according to one aspect of the disclosure.

### DETAILED DESCRIPTION

This disclosure is directed to a thin-film coating with a thermal emissivity (TE) switchable between low and high values by changing the temperature of a substrate. In one general aspect, a switchable TE is achieved by a multi-layer coating comprising thermochromics (in one aspect VO₂ is used) and long-wave infrared films, in a reflective configuration, with thermochromics as the active material. The coating produces a change in surface thermal absorptance, and total emissivity, as the coating substrate temperature passes through the thermochromic phase-change transition temperature. The change in TE is significant for particular coating designs, enabling use of this coating for passive thermal control of the underlying platforms.

A variable TE coating offers a low SWAP approach to providing thermal control for space platforms. Space platforms are subject to events impacting internal subsystem temperatures, which may exceed a subsystem operating temperature range. Thus, heating and cooling approaches are needed to mitigate such temperature fluctuations. In one general aspect, the use of an exterior coating that changes radiative heat flow from the platform to the space environment accomplishes such radiative heat control by a passive coating that is simple, compact, robust, and low-cost.

In one general aspect, a variable TE Coating is created by stacking of thermochromic VO₂ and long-wave IR dielectrics, in a reflector architecture. A large coating TE change is accomplished by changing the temperature of the coating substrate through the VO₂ phase change temperature of -67C. Typical coating TE below 67C is ~0.25, while coating TE above 67C is ~0.85, for a TE difference of 0.60.

At temperatures above the transition temperature, VO₂ is a lossy metal. In one aspect, the coating exhibits high absorption at the hot system temperature of approximately 80C. The thinness of this coating, combined with some loss, allows for multiple reflections and multi-pass absorption of incident radiation between the VO₂ layer and the metal layer, resulting in high absorption. In one aspect, the first dielectric underlayer and overlayer have thicknesses that generate an absorption maximum at the 80C Black Body peak, resulting in a high TE. For example, when internals of an object coated in the variable TE coating are above the transition temperature, the high TE results in an emission of heat to decrease temperature. When internals of an object coated in the variable TE coating are below the transition temperature, the low TE results in retaining heat to increase temperature.

The VO₂ layer is between the second dielectric underlayer and the second dielectric overlayer (in one aspect the VO₂ layer is between two thin layers of Al₂O₃), which promote good switching response in the VO₂ layer, by lattice-constant matching and stoichiometry preservation.

In one aspect, the coating shows cold-state TE of -0.21 and hot-state TE of ~0.86, for a TE range of -0.65. Such TE values makes this coating useful for passive thermal control of space platforms. Furthermore, the coating is attractive for such applications because of its simplicity, robustness, and low SWAP characteristics.

Thermochromics are materials that change state with temperature. For many of these materials, substantial changes in optical properties accompany that change of state. By incorporation into an appropriately designed optical stack, the changes in optical properties can be used to induce significant excursions in emissivity. Further, many of these thermochromics are characterized by hysteresis in their switching response. A narrow hysteresis width is typically desirable in practice.

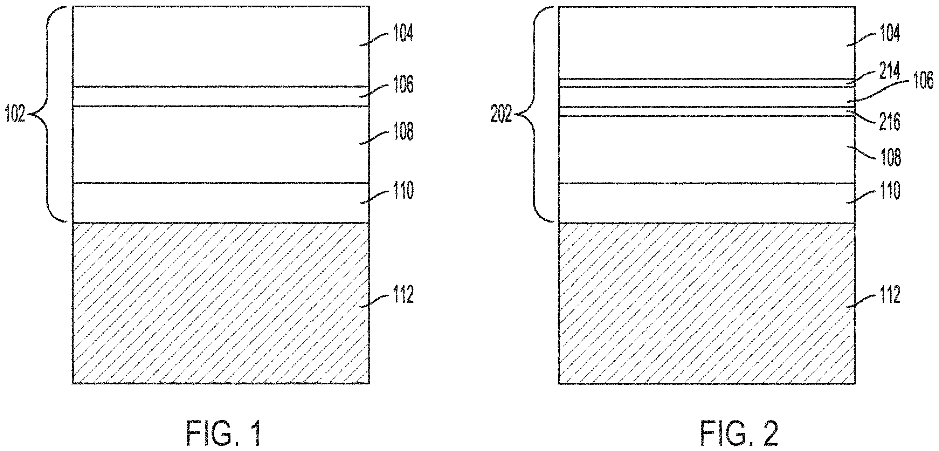

Turning now to the Figures, Figure 1 is one aspect of a coating 102 according to an exemplary aspect of the disclosure. The coating 102 comprises a first dielectric overlayer 104, a first dielectric underlayer 108, a continuous thermochromic layer 106 disposed between the first dielectric overlayer 104 and the first dielectric underlayer 108, and a metal layer 110 disposed below the first dielectric underlayer 108. The coating 102 is disposed over a substrate 112.

Figure 2 is one aspect a coating 202 according to an exemplary aspect of the disclosure. The coating 202 comprises the same elements from Figure 1. The coating 202 further comprises a second dielectric overlayer 214 disposed between first dielectric overlayer 104 and the thermochromic layer 106 and a second dielectric underlayer 216 disposed between the first dielectric underlayer 108 and the thermochromic layer 106.

One aspect of the coating 202 consists of a thin-film stack of Cr/ZnSe/Al₂O₃/ VO₂/ Al₂O₃/ZnSe with layer thicknesses of l200 Å /7960 Å /100 Å /340 Å / 100 Å /9350 Å. The thermochromic VO₂ layer enables switching in response to temperature changes through the transition temperature of ~67C. At temperatures below the transition temperature, VO₂ is a dielectric. In one aspect, the variable TE coating exhibits low absorption at the cold system temperature of ~23C. The first dielectric overlayer and underlayer ZnSe have thicknesses that generate an absorption minimum at the 23C Black Body peak, resulting in low TE.

Referring now to both Figure 1 and Figure 2, in one aspect, the first dielectric overlayer 104 or the first dielectric underlayer 108 has a thickness from 2,500 angstroms (Å) to 20,000 angstroms (Å). The thermochromic layer 106 has a thickness from 100 angstroms (Å) to 2,000 angstroms (Å). The metal layer 110 has a thickness greater than or equal to 500 angstroms (Å).

In another aspect, the first dielectric overlayer 104 has a thickness from 9,200 angstroms (Å) to 9,500 angstroms (Å). The first dielectric underlayer 108 has a thickness from 7,810 angstroms (Å) to 8,110 angstroms (Å). The continuous thermochromic layer 106 has a thickness from 280 angstroms (Å) to 400 angstroms (Å). The metal layer 110 has a thickness from 1,000 angstroms (Å) to 1,400 angstroms (Å). The second dielectric overlayer 214 has a thickness from 80 angstroms (Å) to 120 angstroms (Å). The second dielectric underlayer 216 has a thickness from 80 angstroms (Å) to 120 angstroms (Å). Preferably, the first dielectric overlayer stack has a thickness from 8,400 angstroms (Å) to 10,300 angstroms (Å), the first dielectric underlayer stack has a thickness from 7,000 angstroms (Å) to 8,600 angstroms (Å), the continuous thermochromic layer has a thickness from 200 angstroms (Å) to 600 angstroms (Å), and the metal layer has a thickness from 1,000 angstroms (Å) to 2,000 angstroms (Å).

The emissivity of the thermochromic layer 106 varies based on a temperature of the substrate 112 disposed below the metal layer 110. The thermochromic layer 106 has a transition temperature from 60-70 degrees Celsius. As the temperature of the substrate 112 moves through the transition temperature, the coating 102 changes TE. When the temperature of the substrate 112 is at temperatures above the transition temperature, the second dielectric overlayer 214 and underlayer 216 promote a good switching response in the thermochromic layer 106. The coating 102, 202 exhibits high absorption at the hot system temperature of approximately 80C. The high absorption is achieved by multiple reflections and multi-pass absorption of incident radiation between the thermochromic layer 106 and the metal layer 110. In one aspect, the coating emits heat at high TE.

When the temperature of the substrate is at temperatures below the transition temperature, the thermochromic layer 106 acts as a dielectric. In one aspect, the variable TE coating exhibits low absorption at the cold system temperature of ~23C. The first dielectric overlayer and underlayer have thicknesses that generate an absorption minimum at the 23C Black Body peak, resulting in a low TE. In one aspect, the coating minimizes emission of heat at low TE.

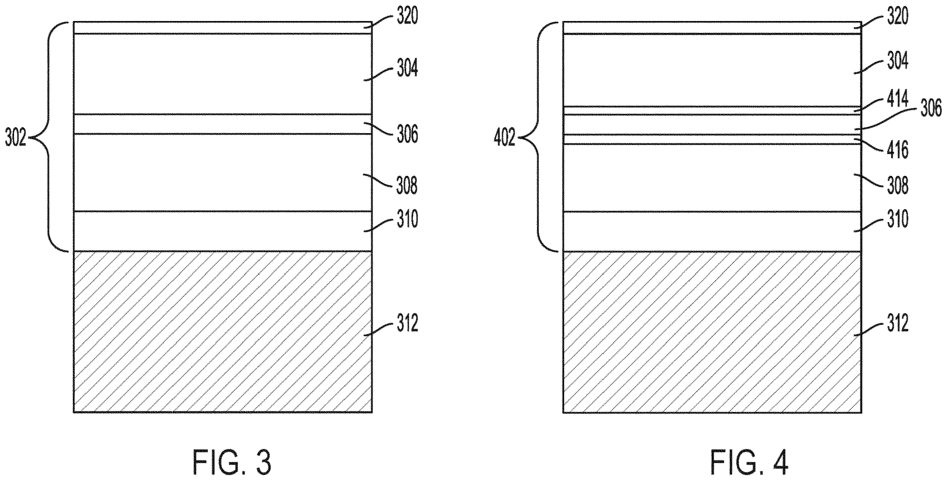

Figure 3 is one aspect a coating 302 according to an exemplary aspect of the disclosure. The coating 302 comprises a first dielectric overlayer 304, a first dielectric underlayer 308, a continuous thermochromic layer 306 disposed between the first dielectric overlayer 304 and the first dielectric underlayer 308, a metal layer 310 disposed below the first dielectric underlayer 308, and a capping layer 320 disposed above the first dielectric overlayer 304. The coating 302 is disposed over a substrate 312.

Figure 4 is one aspect a coating 402 according to an exemplary aspect of the disclosure. The coating 402 comprises the same elements from Figure 3. The coating 402 further comprises a second dielectric overlayer 414 disposed between first dielectric overlayer 304 and the thermochromic layer 306 and a second dielectric underlayer 416 disposed between the first dielectric underlayer 308 and the thermochromic layer 306.

In one aspect, the capping layer 320 protects the coating 302. The coating 302, 402 operates in the same manner as coating 102, 202.

Referring now to both Figures 3 and 4, in one aspect, the capping layer 320 has a thickness from 130 angstroms (Å) to 136 angstroms (Å). The metal layer 312 has a thickness from 1,900 angstroms (Å) to 2,100 angstroms (Å). The thermochromic layer 306 has a thickness from 320 angstroms (Å) to 410 angstroms (Å). The first dielectric overlayer 304 has a thickness from 7,300 angstroms (Å) to 8,100 angstroms (Å). The first dielectric underlayer 308 has a thickness from 7,200 angstroms (Å) to 8,000 angstroms (Å). The second dielectric overlayer 414 has a thickness from 80 angstroms (Å) to 120 angstroms (Å). The second dielectric underlayer 416 has a thickness from 80 angstroms (Å) to 120 angstroms (Å).

Referring now to Figures 1-4, in one aspect, the first dielectric overlayer and the first dielectric underlayer contain at least one material selected from the group consisting of Zinc Sulfide (ZnS), Zinc Selenide (ZnSe), Germanium (Ge), and Aluminum Oxide (Al₂O₃). Preferably, the first dielectric overlayer stack and the first dielectric underlayer stack contain at least one material selected from the group consisting of Zinc Sulfide (ZnS), Zinc Selenide (ZnSe), Germanium (Ge), Yttrium Flouride (YF₃), and Aluminum Oxide (Al₂O₃). In another aspect, the first dielectric overlayer and the second dielectric underlayer contain at least one Fluoride selected from the group consisting of Calcium Fluoride (CaF₂), Barium Fluoride (BaF₂), Magnesium Fluoride (MgF2), Thorium Fluoride (ThF₄), Yttrium Fluoride (YF₃), Ytterbium Fluoride (YbF₃), Lanthanum Fluoride (LaF₃), Aluminum Fluoride (AlF₃), Hafnium Fluoride (HfF₄), and Cerium Fluoride (CeF₃), as well as other fluoride compositions.

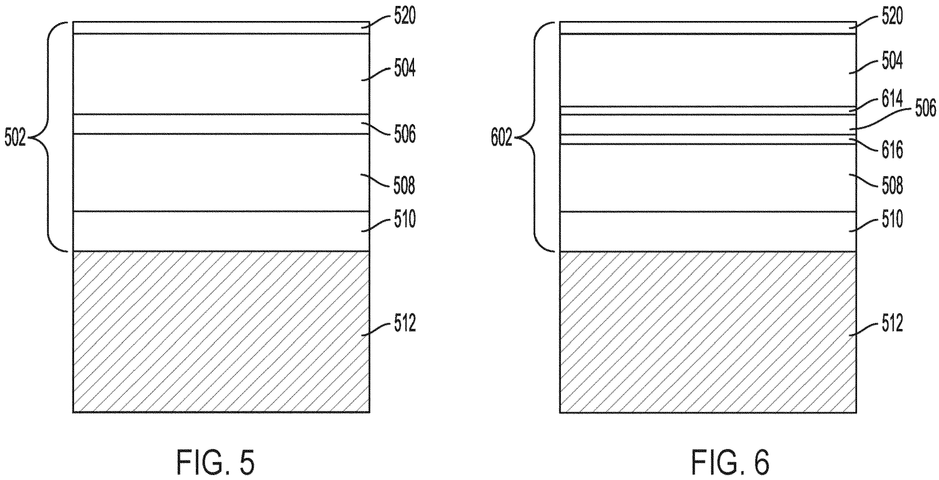

Figure 5 is one aspect a coating 502 according to an exemplary aspect of the disclosure. The coating 502 comprises a first dielectric overlayer 504, a first dielectric underlayer 508, a continuous thermochromic layer 506 disposed between the first dielectric overlayer 504 and the first dielectric underlayer 508, a capping layer 520 disposed above the first dielectric overlayer 504, and a metal layer 510 disposed below the first dielectric underlayer 508. The coating 502 is disposed over a substrate 512. The first dielectric overlayer 504 contains at least one material selected from the group consisting of Zinc Sulfide (ZnS), Zinc Selenide (ZnSe), Germanium (Ge), and Aluminum Oxide (Al₂O₃) and the first dielectric underlayer 508 contains Germanium (Ge).

Figure 6 is one aspect a coating 602 according to an exemplary aspect of the disclosure. The coating 602 comprises the same elements from Figure 1. The coating 602 further comprises a second dielectric overlayer 614 disposed between first dielectric overlayer 504 and the thermochromic layer 506 and a second dielectric underlayer 616 disposed between the first dielectric underlayer 508 and the thermochromic layer 506. Coating 502, 602 operates in a similar manner to coating 102, 202, 302, 402.

Referring to both figures 5 and 6, in one aspect, the capping layer has a thickness from 680 angstroms (Å) to 710 angstroms (Å). The metal layer 512 has a thickness from 1,900 angstroms (Å) to 2,100 angstroms (Å). The first dielectric underlayer 508 has a thickness from 3,990 angstroms (Å) to 4,160 angstroms (Å). The first dielectric overlayer 504 has a thickness from 8,020 angstroms (Å) to 8,190 angstroms (Å). The thermochromic layer has a thickness from 400 angstroms (Å) to 480 angstroms (Å). The second dielectric overlayer 214 has a thickness from 80 angstroms (Å) to 120 angstroms (Å). The second dielectric underlayer 216 has a thickness from 80 angstroms (Å) to 120 angstroms (Å).

Referring now to Figures 1-6 in general, in one aspect, the thermochromic layer contains at least one material selected from the group consisting of Vanadium Oxides, Rare Earth Nickelates, Chalcogenides, and Perovskite oxides. In one aspect, the Vanadium Oxide is selected from the group consisting of VO₂, V₂O₃, and VO. In one aspect, the Vanadium Oxide is modified by one of doping, ion implantation, or stoichiometry modification. In one aspect, the Chalcogenides is GeSbTe. In one aspect, the Perovskite oxides is LaCaSrMnO. In one aspect the Rare Earth Nickelate is NdNiO₃.

In one aspect, the first dielectric overlayer and underlayer comprise a material with a loss at long-wave infrared wavelengths from 0% to 10%.

In one aspect, the metal layer contains at least one material selected from the group consisting of Chromium, Platinum, and Gold. In one aspect, the metal forming the metal layer has a reflectivity from 90% to 99.9%. In one aspect, the metal forming the metal layer has a high reflectivity. Preferably, the metal forming the metal layer has a reflectivity from 85% to 99.9% for wavelengths greater than 5 micrometers.

In one aspect, the second dielectric overlayer and the second dielectric underlayer contain Aluminum Oxide (Al₂O₃).

In one aspect, optical constants of the thermochromic layer varies based on a temperature of a substrate.

In one aspect, the emissivity of the thermochromic layer varies based on a temperature of a substrate. In one aspect, a surface thermal absorptance and emissivity of the substrate varies based on the thermochromic layer.

In one aspect, the thermochromic layer has a transition temperature from 60-70 degrees Celsius, and wherein the thermochromic layer acts as a dielectric at a temperature below the transition temperature. In one aspect, the thermochromic layer has a first absorption at a temperature below 23 degrees Celsius, and a second absorption at a temperature above 80 degrees Celsius. For example, the thermochromic layer has a thermal emissivity from 0.19 to 0.23 at a temperature below the transition temperature, and the thermochromic layer has a thermal emissivity from 0.84 to 0.86 at a temperature above the transition temperature. Preferably, the coating has thermal emissivity below 0.30 at a temperature below the transition temperature of the thermochromic material and has a thermal emissivity above 0.70 at a temperature above the transition temperature of the thermochromic material. The thermochromic layer has a delta from 0.61 to 0.67 between a cold state temperature below the transition temperature and a hot state temperature above the transition temperature.

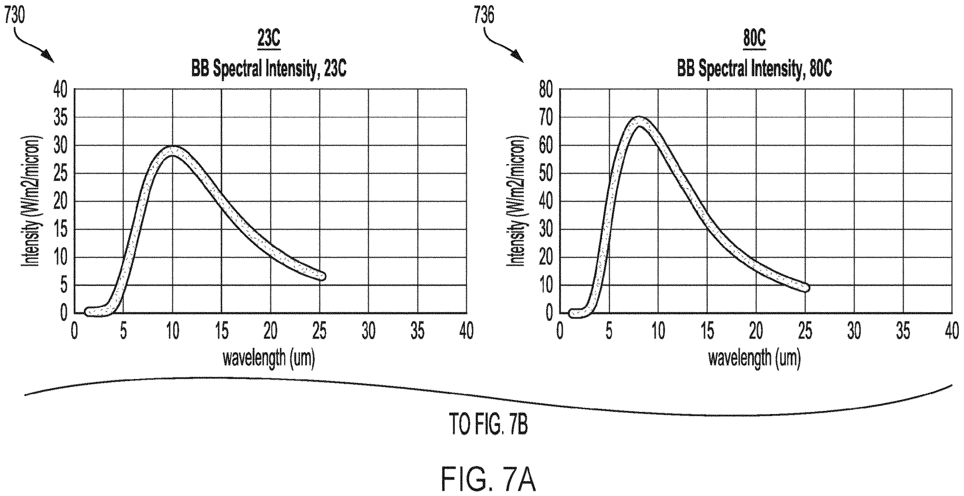

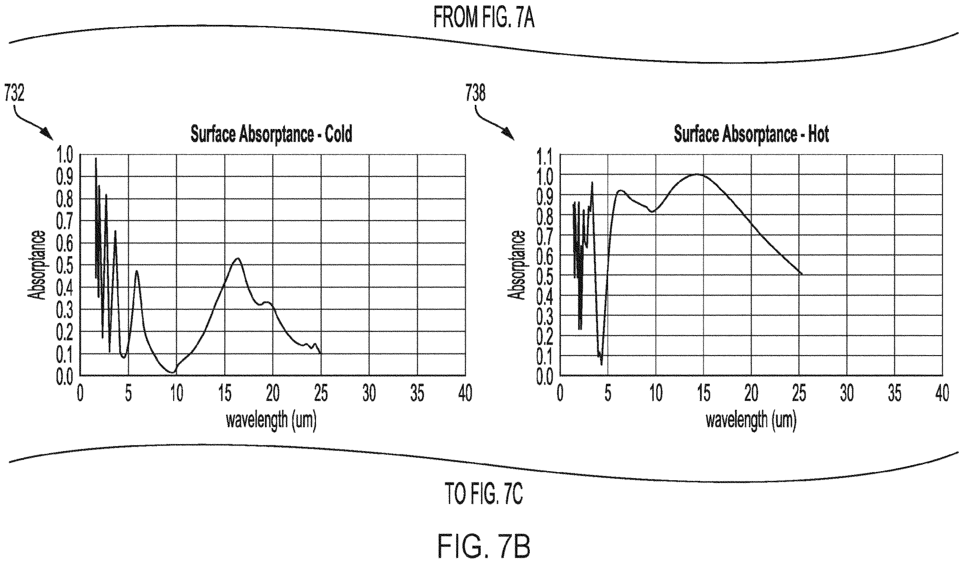

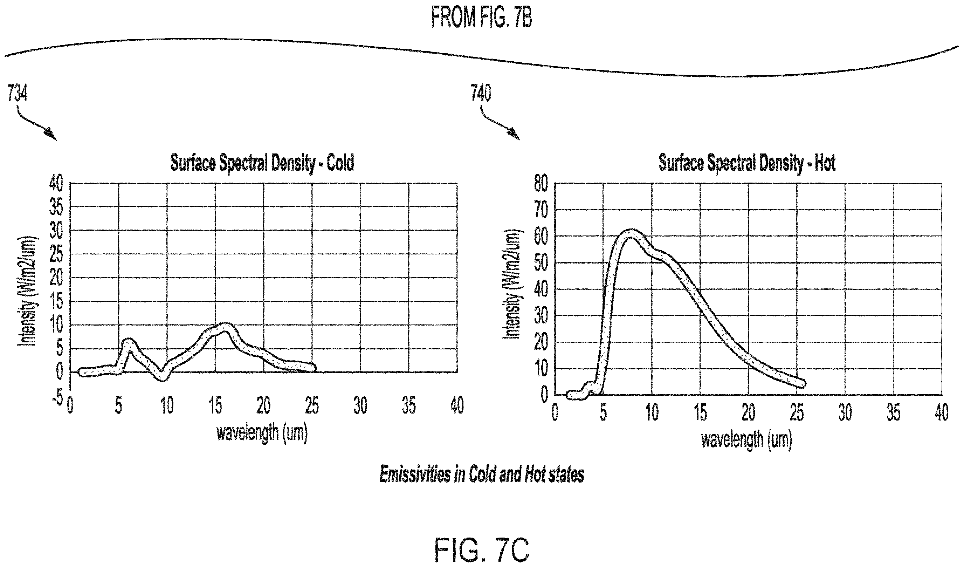

Figure 7 shows graphs of thermal emissivities of a variable emissivity coating in cold and hot states, according to one aspect of the disclosure. The black body spectral intensity graph 730 at 23 degrees Celsius shows the radiated intensity for different wavelengths in the infrared spectrum. The peak occurs around 10 micrometers. The cold surface absorptance graph 732 illustrates the absorptance of the variable emissivity coating at different wavelengths. The coating absorptance at 23 degrees Celsius varies based on wavelength as shown in the cold surface absorptance graph, with a valley at 10 micrometers. The cold surface spectral density graph 734, derived from black-body weighting of the coating absorptance, illustrates the coating spectral intensity at different wavelengths. The small area under this curve, relative the black body curve 730, indicates coating low thermal emissivity.

The black body intensity graph 736 at 80 degrees Celsius shows the spectral intensity for different wavelengths in the infrared spectrum. The peak absorptance is between 5 and 15 micrometers. The hot surface absorptance graph 738 illustrates the absorptance of the variable emissivity coating at different wavelengths. The coating absorptance shows a broad peak between 5 and 20 micrometers. The hot surface spectral density graph 740 illustrates the coating spectral intensity at different wavelengths. The large area under this curve, comparable to the black body curve 736, indicates coating high thermal emissivity.

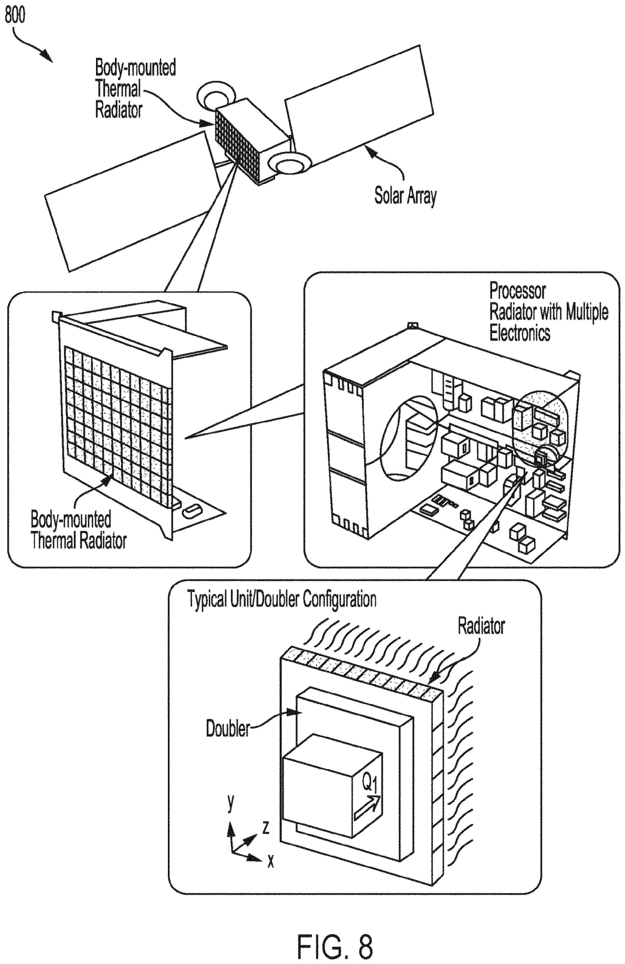

Figure 8 is a thermal control system 800 for a space platform comprising variable emissivity coatings described in Figures 1-6, according to one aspect of the disclosure. The present disclosure can be used as a thermal control for space platforms. A space platform is subject to events impacting the internal temperature of the platform, thus requiring methods to cool and heat the internal systems. Thermal control can be achieved with active approaches such as on-board heat sinks and sources but these have costly SWAP impacts. Examples of cooling sinks are thermoelectrics and fluid loops. Examples of heating sources are radioisotopes and resistors.

Thermal control can also be achieved by varying the radiative heat flow between the platform and space. Such radiative thermal control can be achieved with actuated louvers which mechanical opening and closing slats. The louvers are complex and have reliability and SWAP impacts. Passive radiative thermal control can be achieved by temperature-induced deflection of bimorph actuators attached to slats. This passive mechanical approach still has SWAP, complexity and reliability impacts.

Passive radiative thermal control can be achieved without
SWAP/complexity/reliability impacts can be achieved by varying surface emissivity between hot and cold scenarios. When the internals of a platform are cold, the surface has a low emissivity which retains heat to increase temperature. When the internals of the platform are hot, the surface has high emissivity which emits heat to decrease temperature.

Any of the coatings from Figures 1-6 can be applied to the satellite shown or any other object used in space.

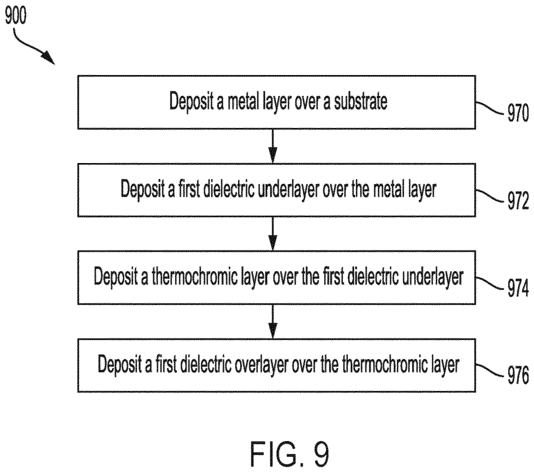

Figure 9 is one aspect of a method 900 of manufacturing a variable emissivity coating, according to one aspect of the disclosure. According to one aspect of the method 900 of manufacturing a thermal emissivity coating, a metal layer is deposited 970 over a substrate. A first dielectric underlayer is deposited 972 over the metal layer. A thermochromic layer is deposited 974 over the first dielectric underlayer. A first dielectric overlayer is deposited 976 over the thermochromic layer.

In another aspect of the method, a capping layer is deposited over the first dielectric overlayer.

In another aspect of the method, the first dielectric underlayer is deposited according to at least one of: evaporation, sputtering, Metal-Organic Chemical Vapor Deposition, or Metal-Organic Vapor Phase Epitaxy.

In another aspect of the method, the first dielectric overlayer is deposited according to at least one of: evaporation, sputtering, Metal-Organic Chemical Vapor Deposition, or Metal-Organic Vapor Phase Epitaxy.

In another aspect of the method, the thermochromic layer is deposited according to at least one of: atomic layer deposition, sputtering, evaporation, sol-gel, laser ablation, or annealing.

In another aspect of the method, the metal layer is deposited according to at least one of: plating, evaporation, or sputtering.

In another aspect of the method, a second dielectric underlayer is deposited between the first dielectric underlayer and the thermochromic layer and a second dielectric overlayer is deposited between the thermochromic layer and the first dielectric overlayer.

Examples of the method according to various aspects of the present disclosure are provided below in the following numbered clauses. An aspect of the method may include any one or more than one, and any combination of, the numbered clauses described below.

Clause 1. A coating comprising: a first dielectric overlayer; a first dielectric underlayer; continuous thermochromic layer disposed between the first dielectric overlayer and the first dielectric underlayer; and a metal layer disposed below the first dielectric underlayer.

Clause 2. The coating of clause 1, further comprising: a second dielectric overlayer disposed between first dielectric overlayer and the thermochromic layer; and second dielectric underlayer disposed between the first dielectric underlayer and the thermochromic layer.

Clause 3. The coating of clause 2, wherein the second dielectric overlayer and the second dielectric underlayer contain Aluminum Oxide (Al₂O₃).

Clause 4. The coating of any one of clauses 1-3, wherein the first dielectric overlayer and the first dielectric underlayer contain at least one material selected from the group consisting of Zinc Sulfide (ZnS), Zinc Selenide (ZnSe), Germanium (Ge), and Aluminum Oxide (Al₂O₃).

Clause 5. The coating of any one of clauses 1-3, wherein the first dielectric overlayer and the first dielectric underlayer contain at least one Fluoride selected from the group consisting of Calcium Fluoride (CaF₂), Barium Fluoride (BaF₂), Magnesium Fluoride (MgF2), Thorium Fluoride (ThF₄), Yttrium Fluoride (YF₃), Ytterbium Fluoride (YbF₃), Lanthanum Fluoride (LaF₃), Aluminum Fluoride (AlF₃), Hafnium Fluoride (HfF₄), and Cerium Fluoride (CeF₃).

Clause 6. The coating of any one of clauses 1-5, wherein the thermochromic layer contains at least one material selected from the group consisting of Vanadium Oxides, Chalcogenides, Rare Earth Nickelates and Perovskite oxides.

Clause 7. The coating of clause 6, wherein the Vanadium Oxides is selected from the group consisting of VO₂, V₂O₃, and VO.

Clause 8. The coating of clause 6, wherein the Chalcogenides is GeSbTe.

Clause 9. The coating of clause 6, wherein the Perovskite oxides is LaCaSrMnO.

Clause 10. The coating of any one of clauses 1-9, wherein the metal layer contains at least one material selected from the group consisting of Platinum, Chromium, and Gold.

Clause 11. The coating of any one of clauses 1-10, wherein emissivity of the thermochromic layer varies based on a temperature of a substrate disposed below the metal layer.

Clause 12. The coating of any one of clauses 1-11, a surface thermal absorptance and emissivity of the coating varies based on the thermochromic layer.

Clause 13. The coating of any one of clauses 1-12, wherein the thermochromic layer has a transition temperature from 60-70 degrees Celsius, and wherein the thermochromic layer acts as a dielectric at a temperature below the transition temperature.

Clause 14. The coating of any one of clauses 1-13, wherein the thermochromic layer has a first absorption at a temperature below 23 degrees Celsius, and a second absorption at a temperature above 80 degrees Celsius.

Clause 15. The coating of any one of clauses 1-14, wherein the thermochromic layer has a thermal emissivity from 0.19 to 0.23 at a temperature below the transition temperature, and the thermochromic layer has a thermal emissivity from 0.84 to 0.88 at a temperature above the transition temperature.

Clause 16. The coating of any one of clauses 1-14, wherein the thermochromic layer has a thermal emissivity delta from 0.61 to 0.67 between a cold state temperature below the transition temperature and a hot state temperature above the transition temperature.

Clause 17. The coating of any one of clauses 1-16, wherein the metal forming the metal layer has a reflectivity from 90% to 99.9%.

Clause 18. The coating of any one of clauses 1-17, wherein the first dielectric overlayer and underlayer comprise a material with a loss at long-wave infrared wavelengths from 0% to 10%.

Clause 19. The coating of any one of clauses 1-18, wherein the first dielectric overlayer or the first dielectric underlayer has a thickness from 2,500 angstroms (Å) to 20,000 angstroms (Å).

Clause 20. The coating of any one of clauses 1-19, wherein the thermochromic layer has a thickness from 100 angstroms (Å) to 2,000 angstroms (Å).

Clause 21. The coating of any one of clauses 1-20, wherein the metal layer has a thickness greater than or equal to 500 angstroms (Å).

Clause 22. The coating of any one of clauses 1-18, wherein: the first dielectric overlayer has a thickness from 9,200 angstroms (Å) to 9,500 angstroms (Å); the first dielectric underlayer has a thickness from 7,810 angstroms (Å) to 8,110 angstroms (Å); the continuous thermochromic layer has a thickness from 280 angstroms (Å) to 400 angstroms (Å); and the metal layer has a thickness from 1,000 angstroms (Å) to 1,400 angstroms (Å).

Clause 23. The coating of any one of clauses 2, 3, or 22, wherein: the second dielectric overlayer has a thickness from 80 angstroms (Å) to 120 angstroms (Å); and the second dielectric underlayer has a thickness from 80 angstroms (Å) to 120 angstroms (Å).

Clause 24. The coating of any one of clauses 1-23, comprising a capping layer disposed above the first dielectric overlayer.

Clause 25. The coating of any one of clauses 24, wherein the capping layer has a thickness from 130 angstroms (Å) to 136 angstroms (Å).

Clause 26. The coating of any one of clauses 24, wherein the capping layer has a thickness from 680 angstroms (Å) to 710 angstroms (Å).

Clause 27. The coating of any one of clauses 24-26, wherein the metal layer has a thickness from 1,900 angstroms (Å) to 2,100 angstroms (Å).

Clause 28. The coating of clause 24, wherein the first dielectric overlayer contains at least one material selected from the group consisting of Zinc Sulfide (ZnS), Zinc Selenide (ZnSe), Germanium (Ge), and Aluminum Oxide (Al₂O₃) and the first dielectric underlayer contains Germanium (Ge).

Clause 29. The coating of clause 28, wherein the first dielectric underlayer has a thickness from 3,990 angstroms (Å) to 4,160 angstroms (Å).

Clause 30. A method of manufacturing a coating comprising: depositing a metal layer over a substrate; depositing a first dielectric underlayer over the metal layer; depositing a thermochromic layer over the first dielectric underlayer; and depositing a first dielectric overlayer over the thermochromic layer.

Clause 31. The method of clause 30, further comprising depositing a capping layer over the first dielectric overlayer.

Clause 32. The method of any one of clauses 30-31, wherein depositing the first dielectric underlayer comprises at least one of: evaporation, sputtering, or MetaloOrganic Vapor Phase Epitaxy.

Clause 33. The method of any one of clauses 30-32, wherein depositing the first dielectric overlayer comprises at least one of: evaporation, sputtering, or MetaloOrganic Vapor Phase Epitaxy.

Clause 34. The method of any one of clauses 30-33, wherein depositing the thermochromic layer comprises at least one of: atomic layer deposition, sputtering, evaporation, sol-gel, laser ablation, or annealing.

Clause 35. The method of any one of clauses 30-34, wherein depositing the metal layer comprises at least one of: plating, evaporation, or sputtering.

Clause 36. The method of any one of clauses 30-35, further comprising: depositing a second dielectric underlayer between the first dielectric underlayer and the thermochromic layer; and depositing a second dielectric overlayer between the thermochromic layer and the first dielectric overlayer.

Further examples according to various aspects of the present disclosure are provided below in the following numbered examples. An aspect may include any one or more than one, and any combination of, the numbered examples described below

Example 1. A coating for controlling thermal emissivity of a surface comprising:
a first dielectric overlayer multilayer stack;
a first dielectric underlayer multilayer stack;
a continuous thermochromic layer disposed between the first dielectric overlayer multilayer stack and the first dielectric underlayer multilayer stack; and
a metal layer disposed below the first dielectric underlayer multilayer stack.

Example 2. The coating of example 1, wherein the first dielectric overlayer multilayer stack and the first dielectric underlayer multilayer stack contain at least one material selected from the group consisting of Zinc Sulfide (ZnS), Zinc Selenide (ZnSe), Germanium (Ge), Yttrium Flouride (YF₃), and Aluminum Oxide (Al₂O₃).

Example 3. The coating of example 1 or 2, wherein the first dielectric underlayer multilayer stack contains at least one Fluoride selected from the group consisting of Yttrium Fluoride (YF₃), Magnesium Flouride (MgF₂), Praseodymium Fluoride (PrF₃) and Calcium Fluoride (CaF₂).

Example 4. The coating of any of examples 1, 2 or 3, wherein the thermochromic layer contains at least one material selected from the group consisting of Vanadium Oxides, Chalcogenides, and Perovskite oxides.

Example 5. The coating of example 4, wherein the Vanadium Oxide is selected from the group consisting of VO₂ and V₂O₃.

Example 6. The coating of example 5, wherein the Vanadium Oxide is modified by one of doping, ion implantation, or stoichiometry modification.

Example 7. The coating of any of examples 4 to 6, wherein the Chalcogenides is GeSbTe.

Example 8. The coating of any of examples 4 to 7, wherein the Perovskite oxides is LaCaSrMnO.

Example 9. The coating of any of examples 1 to 8, wherein the metal layer contains at least one material selected from the group coup consisting of Chromium, Platinum, and Gold.

Example 10. The coating of any of examples 1 to 9, wherein optical constants of the thermochromic layer varies based on a temperature of a substrate.

Example 11. The coating of any of examples 1 to 10, where absorptance and thermal emissivity of the coating varies based on temperature.

Example 12. The coating of any of examples 1 to 11, wherein the coating has a thermal emissivity below 0.30 at a temperature below a transition temperature of the thermochromic layer and has a thermal emissivity above 0.70 at a temperature above the transition temperature of the thermochromic layer.

Example 13. The coating of any of examples 1 to 12, wherein the metal forming the metal layer has a reflectivity from 85% to 99.9% for wavelengths greater than 5 micrometers.

Example 14. The coating of any of examples 1 to 13, wherein:
the first dielectric overlayer multilayer stack has a thickness from 8,400 angstroms (Å) to 10,300 angstroms (Å);
the first dielectric underlayer multilayer stack has a thickness from 7,000 angstroms (Å) to 8,600 angstroms (Å);
the continuous thermochromic layer has a thickness from 200 angstroms (Å) to 600 angstroms (Å); and
the metal layer has a thickness from 1,000 angstroms (Å) to 2,000 angstroms (Å).

Example 15. The coating of any of examples 1 to 14, wherein the first dielectric overlayer multilayer stack contains at least one material selected from the group consisting of Zinc Sulfide (ZnS), Zinc Selenide (ZnSe), Germanium (Ge), and Aluminum Oxide (Al₂O₃) and the first dielectric underlayer multilayer stack contains at least one material selected from the group consisting of Zinc Sulfide (ZnS), Zinc Selenide (ZnSe), Germanium (Ge), and Aluminum Oxide (Al₂O₃).

Example 16. A method of manufacturing a coating comprising:
depositing a metal layer over a substrate;
depositing a first dielectric underlayer stack over the metal layer;
depositing a thermochromic layer over the first dielectric underlayer stack; and
depositing a first dielectric overlayer stack over the thermochromic layer.

Example 17. The method of example 16, wherein depositing the first dielectric underlayer stack comprises at least one of: evaporation, sputtering, or Metal-Organic Chemical Vapor Deposition.

Example 18. The method of example 16 or 17, wherein depositing the first dielectric overlayer stack comprises at least one of: evaporation, sputtering, or Metal-Organic Chemical Vapor Deposition.

Example 19. The method of any of examples 16, 17 or 18, wherein depositing the thermochromic layer comprises at least one of: atomic layer deposition, sputtering, evaporation, sol-gel, or laser ablation.

Example 20. The method of any of examples 16 to 19, wherein depositing the metal layer comprises at least one of: plating, evaporation, or sputtering.

Having thus described several aspects and embodiments of the technology of this application, it is to be appreciated that various alterations, modifications, and improvements will readily occur to those of ordinary skill in the art. Such alterations, modifications, and improvements are intended to be within the spirit and scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

Also, as described, some aspects may be embodied as one or more methods. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or," as used herein in the specification and in the claims, should be understood to mean "either or both" of the elements so conjoined, i.e., elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "approximately" and "about" or the symbol "~" may be used to mean within ±20% of a target value in some embodiments, within ±10% of a target value in some embodiments, within ±5% of a target value in some embodiments, and yet within ±2% of a target value in some embodiments. The terms "approximately" and "about" or the symbol "~" may include the target value.

In the claims, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of' and "consisting essentially of" shall be closed or semi-closed transitional phrases, respectively.

Where a range or list of values is provided, each intervening value between the upper and lower limits of that range or list of values is individually contemplated and is encompassed within the disclosure as if each value were specifically enumerated herein. In addition, smaller ranges between and including the upper and lower limits of a given range are contemplated and encompassed within the disclosure. The listing of exemplary values or ranges is not a disclaimer of other values or ranges between and including the upper and lower limits of a given range.

The use of headings and sections in the application is not meant to limit the disclosure; each section can apply to any aspect, embodiment, or feature of the disclosure. Limitations from the specification are not intended to be read into any claims, unless such limitations are expressly included in the claims.

## Claims

1. A coating for controlling thermal emissivity of a surface comprising:
a first dielectric overlayer multilayer stack;
a first dielectric underlayer multilayer stack;
a continuous thermochromic layer disposed between the first dielectric overlayer multilayer stack and the first dielectric underlayer multilayer stack; and
a metal layer disposed below the first dielectric underlayer multilayer stack.

2. The coating of claim 1, wherein the first dielectric overlayer multilayer stack and the first dielectric underlayer multilayer stack contain at least one material selected from the group consisting of Zinc Sulfide (ZnS), Zinc Selenide (ZnSe), Germanium (Ge), Yttrium Flouride (YF₃), and Aluminum Oxide (Al₂O₃).

3. The coating of claim 1 or 2, wherein the first dielectric underlayer multilayer stack contains at least one Fluoride selected from the group consisting of Yttrium Fluoride (YF₃), Magnesium Flouride (MgF₂), Praseodymium Fluoride (PrF₃) and Calcium Fluoride (CaF₂).

4. The coating of any of claims 1-3, wherein the thermochromic layer contains at least one material selected from the group consisting of Vanadium Oxides, Chalcogenides, and Perovskite oxides.

5. The coating of claim 4, wherein the Vanadium Oxide is selected from the group consisting of VO₂ and V₂O₃, wherein optionally the Vanadium Oxide is modified by one of doping, ion implantation, or stoichiometry modification; and/or
wherein the Chalcogenides is GeSbTe; and/or
wherein the Perovskite oxides is LaCaSrMnO.

6. The coating of any of claims 1-5, wherein the metal layer contains at least one material selected from the group coup consisting of Chromium, Platinum, and Gold.

7. The coating of any of claims 1-6, wherein optical constants of the thermochromic layer varies based on a temperature of a substrate.

8. The coating of any of claims 1-7, where absorptance and thermal emissivity of the coating varies based on temperature.

9. The coating of any of claims 1-8, wherein the coating has a thermal emissivity below 0.30 at a temperature below a transition temperature of the thermochromic layer and has a thermal emissivity above 0.70 at a temperature above the transition temperature of the thermochromic layer.

10. The coating of any of claims 1-9, wherein the metal forming the metal layer has a reflectivity from 85% to 99.9% for wavelengths greater than 5 micrometers.

11. The coating of any of claims 1-10, wherein:
the first dielectric overlayer multilayer stack has a thickness from 8,400 angstroms (Å) to 10,300 angstroms (Å);
the first dielectric underlayer multilayer stack has a thickness from 7,000 angstroms (Å) to 8,600 angstroms (Å);
the continuous thermochromic layer has a thickness from 200 angstroms (Å) to 600 angstroms (Å); and
the metal layer has a thickness from 1,000 angstroms (Å) to 2,000 angstroms (Å).

12. The coating of any of claims 1-11, wherein the first dielectric overlayer multilayer stack contains at least one material selected from the group consisting of Zinc Sulfide (ZnS), Zinc Selenide (ZnSe), Germanium (Ge), and Aluminum Oxide (Al₂O₃) and the first dielectric underlayer multilayer stack contains at least one material selected from the group consisting of Zinc Sulfide (ZnS), Zinc Selenide (ZnSe), Germanium (Ge), and Aluminum Oxide (Al₂O₃).

13. A method of manufacturing a coating comprising:
depositing a metal layer over a substrate;
depositing a first dielectric underlayer stack over the metal layer;
depositing a thermochromic layer over the first dielectric underlayer stack; and
depositing a first dielectric overlayer stack over the thermochromic layer.

14. The method of claim 13, wherein depositing the first dielectric underlayer stack comprises at least one of: evaporation, sputtering, or Metal-Organic Chemical Vapor Deposition.

15. The method of claim 13 or 14, wherein depositing the first dielectric overlayer stack comprises at least one of: evaporation, sputtering, or Metal-Organic Chemical Vapor Deposition, and/or
wherein depositing the thermochromic layer comprises at least one of: atomic layer deposition, sputtering, evaporation, sol-gel, or laser ablation, and/or
wherein depositing the metal layer comprises at least one of: plating, evaporation, or sputtering.
